# EUROPEAN PATENT SPECIFICATION

(11) **EP 3 112 218 B1**
(45) Date of publication and mention of the grant of the patent: **20.12.2017**
(21) Application number: 16177437.7
(22) Date of filing: 01.07.2016
(51) Int. Cl.: B60R 9/055, E05B 65/52, E05C 9/02

(54) **ROOF BOX FOR VEHICLES**
DACHKOFFER FÜR FAHRZEUGE
COFFRE DE TOIT POUR VÉHICULES

(30) Priority: 02.07.2015 EP 15174983
(43) Date of publication of application: 04.01.2017
(73) Proprietor: Thule Sweden AB, 330 33 Hillerstorp (SE)
(72) Inventor: TÜYLÜCE, Abdurrahman, 92353 Postbauer-Heng (DE); FRITSCHE, Günther, 92353 Postbauer (DE); ARVIDSSON, Andreas, 57691 Sävsjö (SE); SJÖDELL, Anders, 33155 Värnamo (SE); LINDELL, Morgan, 33135 Värnamo (SE); STRÖMBERG, Markus, 33153 Värnamo (SE)
(74) Representative: Wallentin, Lars

(56) References cited:
- EP-A1- 0 362 506
- EP-A1- 0 422 678
- EP-A2- 1 231 112
- DE-C1- 3 925 708
- DE-C1- 4 216 926

## Description

### TECHNICAL FIELD

A load carrier, such as a roof box, for a vehicle, the load carrier comprises a base, a lid and a lock arrangement arranged on the base and/or lid. The lock arrangement is operated via an actuator.

### BACKGROUND

Load carriers for vehicle, and especially roof boxes for vehicles, are widely used to provide for an enhanced loading capability to vehicles. Roof boxes for vehicles are especially useful as they utilize a space of the vehicle not otherwise utilized. Roof boxes generally have a base and a lockable lid and very often a longitudinal form to provide good volume with relatively low wind resistance. Due to the elongated form of the roof boxes, the lock arrangements are subjected to special requirements. It is desirable to lock the lid at a plurality of lock sites to effectively retain the lid to the base in a safe manner. Further roof boxes are generally manufactured in light weight material such as fiber reinforced composite based material. Although such material is strong and tough, it can be slightly flexible especially when larger pieces are used.

From a safety perspective it is very important that the roof box is properly locked before a user drives away with the vehicle. An insufficiently locked roof box can run the risk of being accidentally opened during motion. It is further a higher risk that an insufficiently locked roof box may be accidentally opened in case of an accident. One lock system having three lock sites for a roof box is disclosed in European patent application no. EP2322382. The lock sites are interconnected via sliding bars to operate the individual lock sites to and enabling them to open and close simultaneously. Likewise The US patent application no. US20120118926A1 disclose a similar solution having a rotatable rod, generally referred to as a drive bar, which provides a rotational connection between three latch assemblies.

The above mentioned solutions have drawbacks however. The solutions may appear to have been locked properly while there still may be lock bolts, or lock pins, which are not fully engaged with the corresponding mating part, thus providing a lock arrangement which may be insufficiently locked. Further, the user gets limited information if the lock arrangement has been properly locked or not.

A good lock arrangement should not only be easy to lock, but be easy to lock properly. There should be clear and reliable indications of whether the lock arrangement has been properly locked. A good lock system should further be flexible in terms of being adaptable to the specific load carrier in which it is intended to be used. It is also important that no protruding parts are arranged on the load carrier and that the actuator is easy and user friendly to operate, while still be safe from a lock perspective. The document EP 1 231 112 A2 discloses a load carrier according to the preamble of claim 1.

### SUMMARY

It is an object of the present invention to provide for a solution, or to at least reduce the drawbacks mentioned above, or to provide for a useful alternative. The objects are at least partly met by a load carrier comprising a base and a lid such as roof box. The load carrier comprises a lock arrangement arranged on the base and/or the lid. The lock arrangement comprises at least a first and a second displaceable lock element arranged at a distance from each other and being operable between a locked and unlocked positon. The lock arrangement is operated via an actuator wherein the actuator is a translatable actuator.

By having a translatable actuator, a very compact and relatively thin lock arrangement may be provided having substantially no parts protruding from the load carrier. Instead, the actuator may be substantially flush with the outer surface of the load carrier. A single actuator may thus be used to operate a plurality of lock elements. It also provides an intuitive function to the user in terms of that a user may easily understand in which direction a translatable actuator is intended to be displaced in order to unlock a lock arrangement. The load carrier preferably comprises at least two individual lock sites which permit sequential locking of each of the lock sites of the lock arrangement. The load carrier is preferably a roof box.

The translatable actuator is a slideable handle or the like. Slideable handles are advantageous as they can be made relatively thin with no protruding parts. Instead, a groove may be provided in the slideable handle by which a user may operate the slideable handle by pushing the slideable handle, just as a matter of example. Optional features are hereafter summarized. The lock arrangement may comprise at least a first and a second displaceable lock element arranged at a distance from each other and being operable between a locked and unlocked positon. The first and the second lock elements are arranged to respectively engage a first and a second lock member arranged on the opposing base or lid when positioned in the locked position. The actuator may thus be used to operate both the first and the second lock element to unlock them simultaneously. This simplifies for a user whom only need to address one operation in order to unlock a two or more lock elements.

The lock arrangement may further comprise an elongated actuation element in working cooperation with the first and the second lock element. The load carrier may be provided with two or more lock elements, such as three, four, five or more lock elements cooperating with the elongated actuation element. The first and the second lock element may be simultaneously displaced together with the elongated actuation element from a locked position to an unlocked position. All of the lock elements can thus be unlocked together and simultaneously.

The first and the second lock elements may be connected to the elongated actuation element so that they can be sequentially displaced from the unlocked position to the locked position. This can ease the closing of the lid to the base as the lock elements may be individually displaced to a locked position.

The lock arrangement may comprise an elongated actuation element and the actuator may be arranged to displace the elongated actuation element from a locked position to a first position, and thereby displacing a first and a second lock elements from a locked position to an unlocked position. A single actuator may thus be used to operate a plurality of lock elements.

The actuator may comprises a protrusion for operatively engage with the elongated actuation element. The protrusion is preferably extending in a vertical direction, and more preferably in a vertical and upwardly direction with respect to the main body of the actuator. This emphasizes the compact and versatile properties of the actuator.

The lock arrangement may form a part of a lid hinge arrangement pivotally connecting the lid with the base. This may enable the lid to be opened from two different sides. When having two lock arrangement which both form a part of a hinge arrangement, the lid may be opened from two different directions. This is advantageous as a user may easily load the load carrier with goods or luggage from different directions.

The elongated actuation element may be displaced by translation, preferably in the longitudinal direction of the elongated actuation element. The elongated actuation element may thus be operated to translate in the longitudinal direction of the elongated actuation element. The elongated actuation element is preferably synchronously moved with the actuator, when the actuator is translatory moved.

The actuator may comprise a key receiving portion such as protruding support member. This may be useful if the actuator has a key lock. A key may be prevented from accidentally being broken off. However, the actuator is preferably separated from the key lock. Hence, the key lock should preferably not be displaced together with the actuator. This simplifies the construction of the actuator.

The lid and/or base has a peripheral outer surface and at least a portion of the actuator may be substantially flush with the peripheral outer surface of the lid or the base. The actuator may be configured in different ways. It has been found that if the actuator is flush, or substantially flush, with the outer surface of the lid and/or base, a user is less likely to be accidentally caught by the protruding parts. The actuator may thus have its surface in the same plane or substantially in the same plane, as the outer surface of the base and/or lid. To establish if a first surface is flush or substantially flush with a second surface, the following may be applied; 5-3 mm is considered to be substantially flush and less than 3 mm is considered to be flush. Just as a matter of example, no protruding parts reduce the risk for parts accidentally breaking if the load carrier should brace against an object.

The actuator may comprise a groove providing a brace surface to a user for pushing the actuator in an unlock direction. The unlock direction is the direction which the actuator is translated in order to unlock the loch mechanism. The groove is preferably big enough for a user to insert one or more fingers to push the actuator. The groove preferably has an opening of about 4-15 cm², preferably about 6-12 cm². This ensures that a user may have an appropriate opening in order for the groove to receive one or more fingers to displace the actuator.

The actuator may be accessible by a user via an aperture, the aperture being arranged in the base, lid or in a panel. The panel may in turn be arranged to the lid and/or to the base. A panel may be used if the lock arrangement is arranged in a housing for example. It provides for modularity so that the lock arrangement may be mounted to a base or a lid via the housing. A portion of the housing may thus after being mounted form a front panel for example.

The groove of the actuator may be partly delimited by a flange extending from the base, lid or the panel, the flange preferably blocking a user to push the actuator in a preselected direction. The preselected direction is preferably the direction towards the position when the actuator is in a ready to unlock position, i.e. the preselected direction is in a direction opposite of the unlock direction. The flange thus safeguards against the actuator being accidentally pushed on an opposing surface to the surface used to push it to unlock the lock arrangement. The flange may extend in a direction substantially perpendicular to the main direction of the side wall of the base, lid or panel, or alternatively have an elongation in a direction transversal to the direction thereof.

The lock arrangement may be at least partly enclosed in a housing. The housing preferably comprises a front panel and a back panel. The front panel advantageously forms a portion of the outer surface of the base and/or lid. By using a housing, especially for a lock site, the lock arrangement may be mounted as a module to the base and/or the lid.

According to the invention the actuator is slideably arranged in the housing. Optionally, the actuator may be slideably arranged between a portion of the housing and a side wall of the base or lid. This provides great versatility during manufacturing and assembly of the load carrier.

According to an aspect, the actuator may be biased towards a lock position. The actuator may be biased by a biasing member such as a spring e.g. a helical, coil or plate spring, a rubber or rubber like material imparting the biasing due to its elastic or flexible properties. The load carrier may be provided with a grip to a user for providing a counter force when displacing the actuator. A user may want to use a grip when pushing the actuator with the fingers. Although this solution has protruding parts, the actuator itself does not protrude from the outer surface of the bas and/or the lid.

The load carrier may be provided with a key lock, the key lock is preferably separated from the actuator. The key lock may be fixed from displacement with respect to the actuator. The key lock can be fixedly positioned in a side wall of the base, the lid or optionally in a panel as disclosed herein. This enables a simple configuration which reduces the complexity of the actuator.

The elongated actuation element may be manufactured from different materials. It may be a rigid element such as a rod, or a flexible element such as a wire. The elongated actuation element is preferably a flat elongated actuation element, preferably manufactured from a material which permits translation, i.e. is form stable in the longitudinal direction, but is still somewhat flexible in terms of that it can bend. This enables the elongated actuation element to be formed along the interior of the load carrier for example, such as along a curved side wall of the load carrier for example. A suitable flat elongated actuation element is from 1-3 mm thick, 5-50 mm wide and 500-3000 mm long.

The elongated actuation element may be displaced by rotation, translation or combinations thereof. A preferred displacement is actuated by translating the elongated actuation element, preferably in the longitudinal direction of the elongated actuation element. It has been found advantageous if the first and the second lock elements are displaceably connected to the elongated actuation element, preferably all of the lock elements are displaceably connected to the elongated actuation element. The lock elements are preferably connected to the elongated actuation element via a connection which permits the elongated actuation element to operate the lock elements but still permits each lock element to be displaced, preferably translated, with respect to the elongated actuation element.

The first and/or the second lock element may be connected to the elongated actuation element via a guiding track and a guiding track cooperating element such as a protrusion. The guiding track permits the guiding track cooperating element to be displaced a limited distance with respect to the elongated actuation element. The limited distance is preferably from 3-40 mm, more preferably from 5-30 mm. The limited distance is preferably substantially parallel, or parallel, with the elongated element, and the longitudinal extension of the elongated element.

The guiding track may be a groove or an aperture arranged in the elongated actuation element. The protrusion may be arranged on the lock element. The groove and/or aperture are preferably elongated having a main elongation from 3-40 mm, preferably 5-30 mm, more preferably 15-25 mm.

The elongated actuation element runs inside of a housing at least between the first and the second lock element. The elongated actuation element may be positioned inside of a protective housing to prevent the elongated actuation element to get caught in any load transported by the load carrier. Such housing may also be used to structurally provide support for the lock element for example.

The housing may comprise apertures, preferably elongated apertures, wherein the first and the second lock elements engages the elongated actuation element through the apertures. The number of apertures is preferably corresponding to the number of guiding tracks or apertures arranged on the elongated actuation element. The elongation of the elongated apertures of the housing may substantially correspond to the main elongation of the groove or aperture of the elongated actuation element.

At least the first lock element, preferably also the second lock element, may be positioned in a preliminary lock position. In the preliminary lock position, the first and/or the second lock element is engaging the corresponding lock member. In the preliminary lock position, the lid of the load carrier is retained to the base but not fully locked thereto. This enable a user to easily lock the lid and sequentially engage the lock elements until the last of the lock elements are engaging the corresponding lock member.

The first lock element and/or the second lock element subsequently may be positioned to a full lock position, in which the displacement of the first and/or the second lock element is prevented by the elongated actuation element. The elongated actuation element can thus function as a lock to all of the lock elements to prevent them from being displaced from the locked position to the unlocked position. It should be noted that the first lock element and/or the second lock element may thus be positioned in a preliminary lock position and in a full lock position.

It has been found to be advantageous that if the actuator comprises a key to lock and/or unlock the actuator, the key is only removable when all locks are locked, i.e. when all of the lock elements are in a full lock position, or in a lock position. Optionally the key is only removable when the elongated actuation element is in a lock position, i.e. preventing the lock elements from displacement from a locked position to an unlocked position.

As mentioned above, the lock arrangement comprises an actuator arranged to displace the elongated actuation element from a locked position to a first position and thereby displacing the first and the second lock element from the locked position to the unlocked position. The actuator may form, or comprise, a displaceable indicator. The displaceable indicator may be arranged to the elongated actuation element so that the displaceable indicator is displaced as a function of the displacement of the elongated actuation element. This can be used to identify the status of the lock elements. A user may thus be made aware of whether the lid is properly locked to the base or not. It should be noted that the actuator disclosed herein may be used separately from the lock arrangement disclosed herein. Hence the actuator and the components and features associated with the actuator may be used with other lock arrangements.

The load carrier described herein provide good ergonomic features in terms of that it permits a user to close the lid of the load carrier using only one hand. It may further be provided with visual, tacit and/or audial feedback to the user. It may further be arranged to sequentially provide a user with visual, tactile and/or audial feedback when a user locks the lid to the base. For example a user may be rewarded with a click when each lock element engages the corresponding lock member.

The lock arrangement may be modular and symmetrical, e.g. for a symmetrical right and left side mounting in the load carrier. This may enable a cheaper production costs as the same lock arrangement can be used independently on the left or right position inside of the load carrier.

### BRIEF DESCRIPTION OF THE DRAWINGS

Non-limiting embodiments will be described in greater detail and with reference to the accompanying drawings in which;
figure 1 shows a load carrier in the form of a roof box comprising two lock arrangements; figure 2a shows a lock arrangement without the roof box;
figures 2b-2g shows the principle of a lock arrangement disclosed herein;
figure 3 shows the lock arrangement of figure 2a with a view in perspective;
figure 4 shows a second lock site in greater detail and with a partly exploded view;
figure 5 shows a base of a roof box, having an actuator according to a non-limiting embodiment;
figure 6 shows a portion of the base and the actuator with a view in perspective and in greater detail;
figure 7 shows an embodiment of a lock arrangement having a translatable actuator to operate all the lock elements;
figure 8; shows a lock site with a translatable actuator in greater detail and in exploded view;
figure 9 shows the actuator and a front panel of figure 8 in exploded view and with a view towards the rear;
figure 10 shows the lock site of figure 8 in an assembled view without the base of the roof box and with the actuator in a ready to unlock position;
figure 11 shows the lock site of figure 8 in an assembled view without the base of the roof box and with the actuator in a ready to unlock position but with the front panel removed to illustrate the interior and the actuator with a better view;
figure 12 shows the lock site of figure 8 in an assembled view without the base of the roof box and with the actuator in an unlock position;

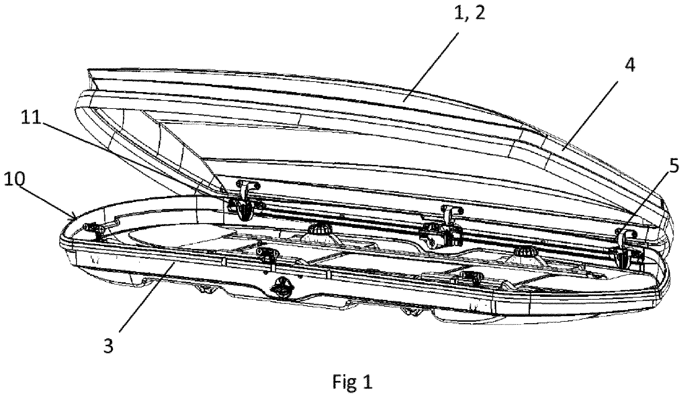

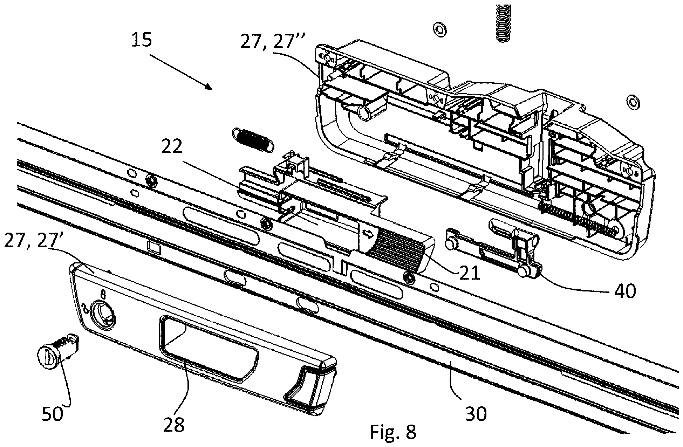

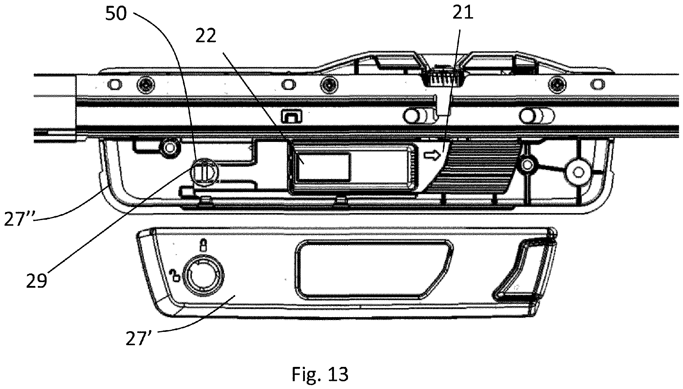

figure 13 shows the lock site of figure 8 in an assembled view without the base of the roof box and with the actuator in an unlock position but with the front panel removed to illustrate the interior and the actuator with a better view; The embodiments of figures 1, 2a, 3 and 4 don't form part of the present invention. Figure 1 shows a load carrier 1 in the form of a roof box 2. The roof box 2 is adapted to be attached on a roof of a vehicle (not shown) via conventional means. The roof box 2 comprises a base 3 and a lid 4. The lid 4 is attached to the base member via a pivot arrangement 5. The pivot arrangement enables the lid 4 to pivot between an opened position, as shown in figure 1, and a closed positon (not shown). It should be noted that the load carrier 1 can be provided with another lid attachment system, the lid 4 could be slideably connected or simply loose with respect to the base 3 for example. A pivot arrangement is however preferred.

The load carrier 1 comprises at least one lock arrangement 10. The load carrier 1 may however be provided with two or more lock arrangements 10. In the shown embodiment, the load carrier 1 described with reference to figure 1 has a first and a second lock arrangements 10, 11. The lock arrangements 10, 11 are cooperating in the sense that they enable the lid 4 to be opened from two directions. Such arrangement is also referred to as a lid hinge arrangement. The lid 4 can be pivotally opened about a first and a second pivot axis substantially along the first and the second longitudinal side of the base 3. It should be noticed that the first and the second lock arrangements 10, 11 may be of the same kind as in the shown embodiment of figure 1, but the load carrier 1 may comprise a first lock arrangement 10, and another pivot or lock arrangement of a different kind. The first and the second lock arrangements 10, 11 are arranged on the side walls of the base 3 and the lid 4 to pivotally connect the base 3 and the lid 4.

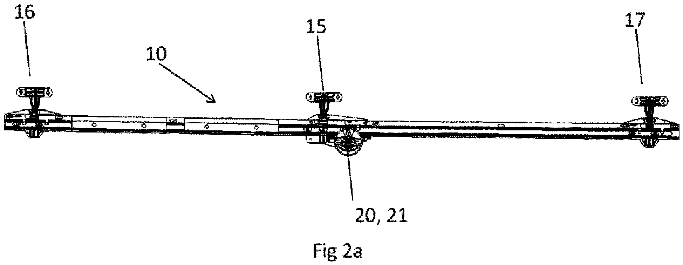

Figure 2a shows the first lock arrangement 10 in greater detail. The first lock arrangement 10 comprises a first, a second and a third lock site 15, 16, 17. Each lock arrangement 10, 11 may be provided with two or more lock sites, such as 3, 4, 5, 6, 7, 8, 9, or more lock sites. A lock site is generally recognized by that it has a lock element which cooperates with a corresponding lock member to provide a lock.

The first lock site 15 comprises an operation mechanism 20, in the form of an actuator 21. The actuator 21 is arranged to enable a user to operate the lock arrangement 10, and thus unlock the lid 4 to permit access to the interior of the load carrier 1. Each lock site 15, 16, 17 can be sequentially locked and/or at least be sequentially positioned in a preliminary lock position. It should be noted that the lock arrangements 10, 11, or just one lock arrangement if only one is present, can be arranged on the lid 4 instead of the base 3.

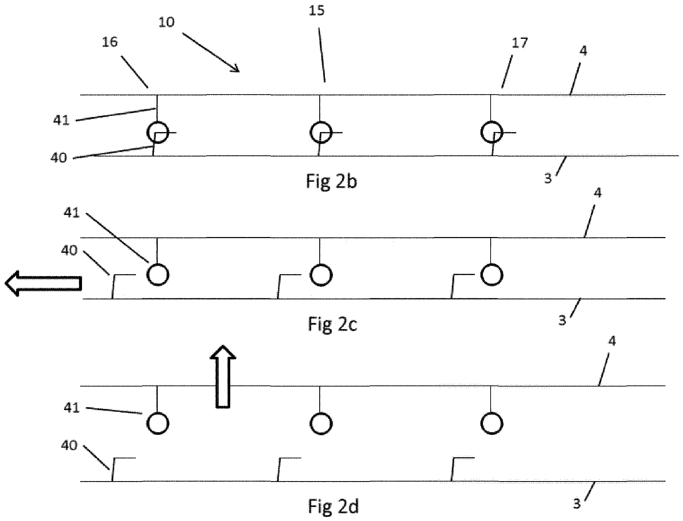

The working principle of the lock arrangement according to the present invention will be described in general terms with reference to figures 2b-2g. Figure 2b shows the lock sites 15, 16, 17 each with the lock element 40 and the lock member 41 in a locked position. All lock sites in this position are locked and retaining the base 3 and the lid 4. The lock sites comprises a lock element 40 and a lock member 41 which are adapted to engage each other in a retaining manner when locked. These features will be described in greater detail below.

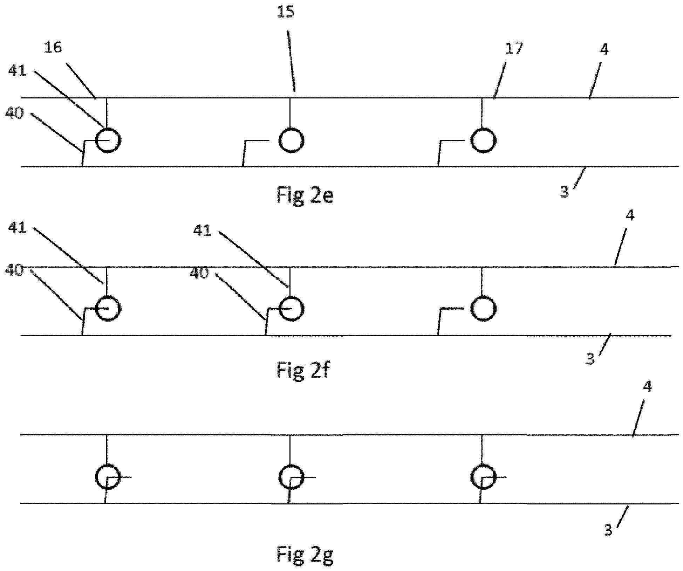

The lock element 40 and the lock member 41 may optionally form a hinge arrangement for the base 3 and the lid 4 but it is not necessary for the purpose of the present invention. Figure 2c shows the unlocking of the lock sites 15, 16, 17, i.e. simultaneously disengaging the lock element 40 from the lock member 41. The lid 4 can now be opened as indicated by the arrow in figure 2d. When the lid 4 is closed, the lock elements may sequentially be positioned to a locked position. In figure 2e, the locked position is a preliminary locked positon visualized by that the lock element 40 is not fully engaging the lock member 41. In figure 2f another lock element of another lock site, in this case the first lock site 15, has been displaced to a preliminary locked position. As can be noticed, the last lock element is still unlocked and is not engaging the lock member 41 at all. When a user presses down the last lock member 41, the lock element 40 of that lock site will together with the other lock elements 40 of the other lock sites is displaced to a full lock position simultaneously as is indicated in figure 2g. The lock elements 40 are operated via an actuation element, e.g. a drive bar as will be described in greater detail below. This operation could be performed in other ways however.

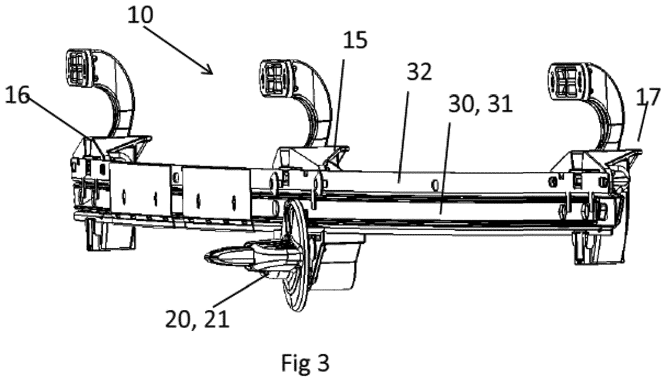

Figure 3 shows figure 2a in greater detail and in a perspective view. Figure 3 shows the first lock arrangement 10, the first, the second and the third lock site 15, 16, 17 and the actuator 21. Figure 3 also shows an elongated actuation element 30 or actuation bar 30. The elongated actuation element 30, in this case a flat elongated actuation element 31 is preferably somewhat flexible permitting the elongated actuation element 30 to be slightly curved. As can be gleaned from figure 3, the elongated actuation element 30 is slightly curved to compensate for the curved form of the base 3 of the load carrier 1. The elongated actuation element 30 connects the first, the second and the third lock site 15, 16, 17 together and enables the actuator 21 to operate each of the lock sites 15, 16, 17. When operating the actuator 21, each of the first, the second and the third lock site 15, 16, 17 can be unlocked for example. The elongated actuation element 30 is displaceably attached, in this case slideably attached, to the interior of the base 3 via a housing 32. The housing 32 is also slightly curved in this case to follow the contours of the base 3. The individual parts of the lock arrangement 10 will now be described in greater detail.

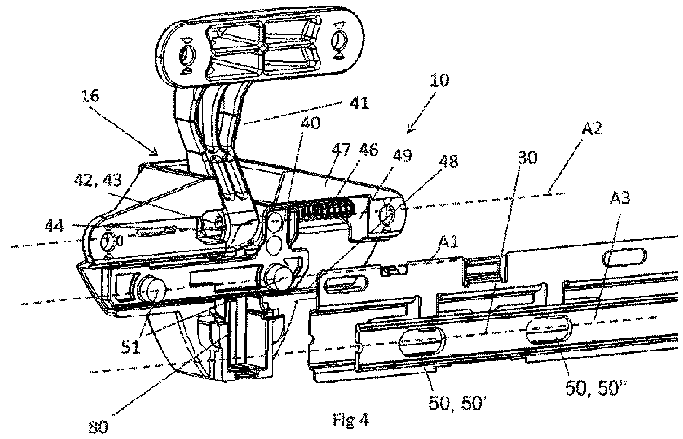

Figure 4 shows the second lock site 16 in greater detail. The second lock site and the third lock site 17 are identical in function and structure, while the first lock site 15 differs in terms of that it is further provided with the actuator 21. A lock site, like the first, second and third lock sites 15, 16, 17 comprises a lock element 40. The lock element 40 is adapted to engage, or mate, with a cooperating lock member 41 arranged on the lid 4 (shown in figure 1). The lock element 40 can be displaced between a locked position and an unlocked position. In the locked position, the lock element 40 is fully engaging the lock member 41 of the lid 4. As will be described below, the lock element 40 can further be positioned in a preliminary lock positon.

The lock element 40 comprises an engagement portion 42, in this case in the form of a pin 43. To lock the lid 4 to the base 3, the pin 43 of the lock element 40 mates in this case with an aperture 44 arranged on the lock member 41. Instead of having a pin 43, the engagement portion can be a hook or similar. The lock element 40 is displaced in the same direction, or at least substantially in the same direction, as the elongated actuation element 30 to translate to an unlocked position as will be described in greater detail below.

A biasing member 46 biases the lock element 40 towards the locked position, in this case towards the left when viewed as shown in figure 4. The biasing member 46 can be a helical spring as shown in figure 4 but other biasing members are possible such as a leaf spring, an elastic member such a rubber member or the like. It is also possible to position the biasing member on the opposite side at which the biasing member could bias the lock element 40 towards the locked position by imparting a pull force, instead of a push force on the lock element 40.

As is noticed, the lock element 40 is slideably arranged in a lock housing 47. The lock housing 47 provide a guide track 48 to the lock element 40. The guide track 48 provides for a predetermined track for the lock element 40 and permits it to slide along the predetermined track so that the lock element 40 can properly engage with the lock member 41. The lock housing 47 further comprises a biasing member support surface 49 onto which the biasing member 46 can brace against when biasing the lock element 40. The lock element 40 has a main elongation which extends along a first centre axis A1. The engagement portion 42, in this case the pin 43, has a main elongation which extends along a second centre axis A2. As can be noticed, the first center axis A1 is parallel, or substantially parallel with the elongated actuation element 30.

The lock element 40 is displaceably connected to the elongated actuation element 30. The lock element 40 has a limited degree of freedom with respect to the elongated actuation element 30 so that the elongated actuation element can be displaced, or in the shown embodiment translated, a limited distance with respect to the lock element 40. The limited displacement is enabled via at least one guiding track 50 arranged on the elongated actuation element 30 and at least one protrusion 51 arranged on the lock element 40. In the shown embodiment, the lock element 40 is provided with two protrusions 51 and the elongated actuation element 30 is provided with elongated apertures 50', 50". Having two protrusions cooperating with two guiding tracks in this case two apertures, provide stability to the displacement of the lock element 40 and the elongated actuation element 30.

When a user rotates the actuator 21, shown in figure 3, the elongated actuation element 30 starts to translate to the right and thus be displaced along a displacement direction. The rotating motion of the actuator 21 translates the elongated actuation element 30 in a horizontal direction. Hence the lock elements may be operated via the elongated actuation element.

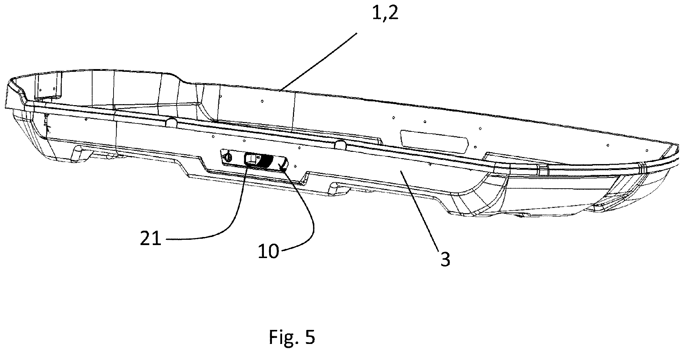

According to the present invention, the lock arrangement is operated via a translatable slide handle. Figure 5 shows a load carrier 1 in the form of a roof box 2. The roof box 2 is adapted to be attached on a roof of a vehicle (not shown) via conventional means. The roof box 2 comprises a base 3 and a lid (not shown). The lid is attached to the base member via a pivot arrangement. The pivot arrangement enables the lid to pivot between an opened position and a closed positon. It should be noted that the load carrier 1 can be provided with another lid attachment system, the lid 4 could be slideably connected or simply loose with respect to the base 3 for example. A pivot arrangement is however preferred.

The load carrier 1 comprises a lock arrangement 10 which may have different configurations. In the embodiment according to the invention, the lock arrangement is substantially the same as disclosed above but with the exception that the actuator is translatable instead of rotatable. The translatory motion of the actuator 21 thus translates the elongated actuation element 30 in a horizontal direction. Hence the lock elements are operated via the elongated actuation element in the same manner as disclosed above, but the actual motion is carried via the actuator 21 which is moved in a translatory motion.

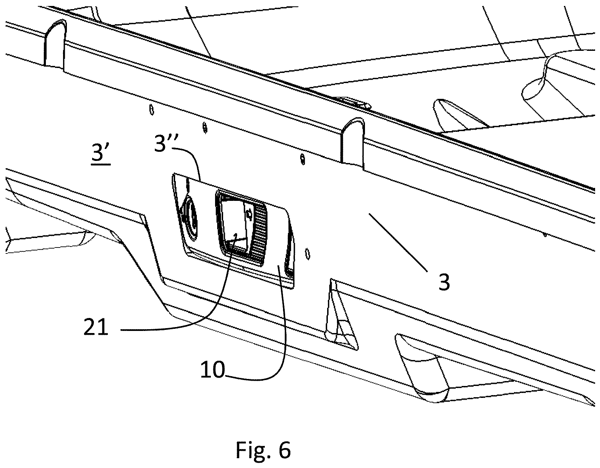

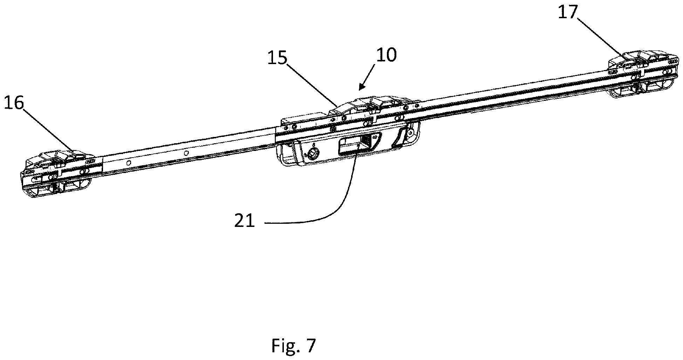

Figure 6 shows the actuator 21 and portions of the base 3 in greater detail. The base 3 has an aperture 3" though which the actuator 21 can be operated. As can be gleaned, the actuator 21 is substantially flush with the outer surface 3' of the base 3. In the shown embodiment, the actuator 21 does not have any protruding elements extending outside of the periphery formed by the outer surface 3' of the base 3. This reduces the risk of the accidentally damaging the actuator 21. It should be noted, that the actuator 21 and the lock arrangement 10 could be arranged in the lid or in the base, just as disclosed above. Figure 7 shows the lock arrangement 10 and the actuator 21 in greater detail. As can be noticed, the lock arrangement comprises three lock sites, although the first lock arrangement 10 comprises a first, a second and a third lock site 15, 16, 17. Each lock arrangement 10 may be provided with two or more lock sites, such as 3, 4, 5, 6, 7, 8, 9, or more lock sites. A lock site is generally recognized by that it has a lock element which cooperates with a corresponding lock member to provide a lock. The lock site operates as disclosed above, but could be differently configured.

Figure 8 shows the first lock site 15 in greater detail and with an exploded view. A lock site, like the first, second and third lock sites 15, 16, 17 comprises a lock element 40. The lock element 40 is adapted to engage, or mate, with a cooperating lock member 41 arranged on the lid (such as shown in figure 1). The lock element 40 can be displaced between a locked position and an unlocked position. In the locked position, the lock element 40 is fully engaging the lock member of the lid and operates in the same manner as disclosed above. The lock element 40 can further be positioned in a preliminary lock positon. The lock element 40 is displaced in the same direction, or at least substantially in the same direction, as the elongated actuation element 30 to translate to an unlocked position. When a user translates the actuator 21 the elongated actuation element 30 starts to translate and is thus be displaced along a displacement direction in the longitudinal direction with the elongated actuation element 30. A key lock 50 is operable by a user to lock the displacement of the actuator 21.

The first lock site 15 comprises a lock housing 27 having a front panel and a rear panel 27', 27". The front panel 27' which is partly visible through the aperture 3" of the base 3 (not shown in figure 8) comprises an aperture 28 through which the actuator may be operated by a user. It should be noted that the front panel 27' of the housing 27 could be formed by a portion of the base 3, or the lid if the lock arrangement 10 is arranged in the lid. The aperture 28 of the front panel 27' should be of sufficient length in order to permit the translatory displacement of the actuator 21.

The actuator 21 has a groove 22 which permits a user to insert his/hers fingers to operate the actuator 21 by pushing on one of the sides formed by the groove 22. Suitable relative dimensions of the groove 22 are approximately depth/width/length 1/1/3. For example, the depth may be 2 cm, the width may be 2 cm and the length may be 6-7 cm. The width and the depth should however be at least 1.5 cm in order to provide a comfortable area for a user to push on in order to translatory move the actuator 21.

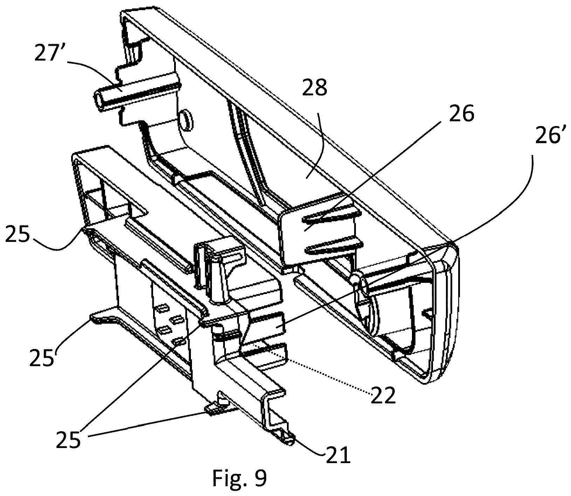

Figure 9 shows the front panel 27' and the actuator 21 with a view from behind. The front panel 27 and the actuator 21 have each a cooperating flange 26, 26'. The flange 26' of the actuator 21 cooperate with the flange of the front panel 26 and prevents the actuator 21 from being pushed too far opposite to the unlock direction. However, the flange 26 of the front panel 27' forms a side wall of the groove 22 prevents a user from pushing back the actuator 21 in a unlock direction before all of the lock elements has been fully engaged with the cooperating lock members. Hence, the groove 22 of the actuator 21 is partly formed by a portion of the front panel 27', or the base 3 if the front panel 27 would be formed by an integrated part thereof.

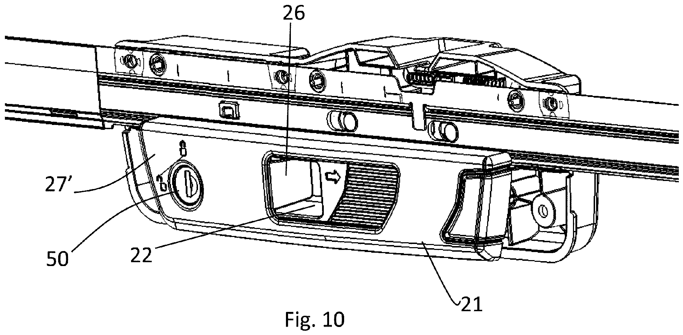

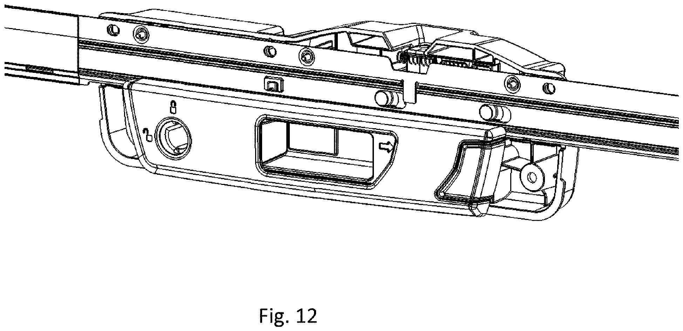

Figure 10 shows the flange 26 of the front panel 27' forming a side wall and thus in a way define the extension of the groove 22 of the actuator 21. Hence in more general terms, the actuator 21 may be provided with a groove wherein the groove is partly delimited by a portion of the front panel, base and/or lid, the groove being operable by a user to push the actuator 21 to an unlocked position, i.e. in an unlock direction to unlock the lock mechanism. The flange 26 partitions the groove 22 into a first and a second partition. The first partition is visible in figure 10 while the second partition is concealed behind the flange 26 and the front panel 27'. As the actuator 21 is pushed in the unlock direction, the first partition will be increased in size making the available groove for the users fingers larger, and the second partition is decreased in size. When the actuator is in the position as shown in figure 10, i.e. a locked position, the first and the second partition is substantially equal in size. As can further be gleaned from figures 10 and 12, the surface of the actuator 21 which slides underneath the front panel 27', or optionally behind a portion of the base or lid, may be used to indicate or signal the state of the lock mechanism. Just as a matter of example, the surface may be used to signal a user if the lock arrangement, or a lock mechanism, is in a locked or unlocked state. The signaling may be made via colors, symbols or text via an aperture in the front panel 27', or the base or lid dependent on the position of the lock arrangement. The second partition may further be used to signal a user using one or more colors, symbols or text. The second partition is only visible to a user when the actuator 21 has been moved to unlock the lock arrangement and may thus be used to indicate this state. Hence, in general terms, the actuator may be provided with a first and a second portion, such as a first and a second partition, wherein the second portion may be used to indicate the lock status to a user by being displaced to a visible position when the actuator is translated.

Turning back to figure 9, figure 9 further shows sliding protrusions 25 arranged on the actuator 21. The actuator 21 may be provided with a plurality of sliding protrusions such as two or more, in the shown embodiment four sliding protrusions 25 are provided on the actuator 21. The sliding protrusions 25 are relatively small and are adapted to cooperate with a guiding rack arranged on the back panel 27" of the housing 27 (not shown in figure 9). The point of the sliding protrusions 25 are only 10 mm or less, preferably about 5 mm. This reduces friction and freezing in moist whether conditions.

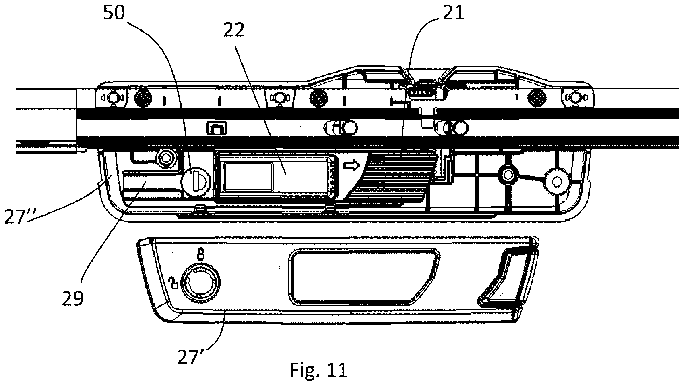

Figure 11 shows the front panel 27' dismounted with respect to the housing 27 and the back panel 27" and with a view towards the actuator 21 and the groove 22 of the actuator 21. The actuator 21 may be provided with a guide track 29 for the key lock 50 (not shown in figure 11). A lock bolt of the key lock 50 may slide in the guiding track 29 when the actuator 21 is displaced. Figures 10 and 11 shows the actuator 21 in a position in which it is ready to be displaced to the right in order to unlock the lock elements from the cooperating lock members, as can be gleaned from the arrow on the actuator 21. As can be noticed, the key lock 50 is positioned at the end of the cooperating guiding track 29, at which the lock bolt of the key lock 50 is permitted to be rotated, and thus to prevent being inserted into the guiding track 29. This effectively locks the actuator 21 from being enabled to be displaced in the shown embodiment to the right when viewed as shown in figures 10 and 11.

Figures 12 and 13 show the actuator after being displaced so as to unlock the associated lock elements (not shown). The position of the key lock 50 is indicated and as being downstream in the guiding track 29. The guiding track 29 effectively prevents the key lock from being locked as the lock bolt cannot be rotated due to the narrow width of the guiding track 29. In more general terms, the actuator 21 may thus be providing with a guiding track, or a function, which prevents the load carrier and the key lock from being locked once the load carrier has been opened. This prevents the loch mechanism from being locked when the load carrier is opened which could prevent the lid from properly being closed. The key lock 50 is separated from the actuator 21 in terms of that when the actuator 21 may be displaced, the key lock may not be displaced.

Generally, the actuator such as the actuator 21, may be formed by a substantially rectangular piece of material. The actuator may be manufactured from plastic material such as thermoplastic material, composite material, metal or combinations thereof. Just as a matter of example, it may be manufactured by molding, or layer by layer technique e.g. by fiber reinforced composite material, or combinations thereof.

The provided solution has an integrated solution in terms of that it has no protruding parts from the outer surface of the load carrier; the mechanism is on the inside. A front panel may be provided on the outside, but the actuator does not extend outside the outer surface of the front panel, which forms an outer surface of the load carrier. By having a translatable actuator, the loch mechanism may be more compact in design. The actuator operates on two or more lock elements.

## Claims

1. A load carrier, such as a roof box, for a vehicle comprising a base (3) and a lid (4), said load carrier (1) comprising a lock arrangement (10) arranged on said base (3) and/or said lid (4), said lock arrangement (10) being operated via an actuator (21), said lock arrangement (10) comprises at least a first and a second displaceable lock element (40) arranged at a distance from each other and being operable between a locked and unlocked positon, wherein said actuator (21) is a slideable handle (21) configured to be translatable **characterized in that** the slideable handle is slideably arranged in a housing (27) mounted to the load carrier.

2. The load carrier according to claim 1, wherein said actuator (21) comprises a key receiving portion such as protruding support member.

3. The load carrier according to any one of the preceding claims, wherein said first and said second lock elements (40) being arranged to respectively engage a first and a second lock member (41) arranged on the opposing base (3) or lid (4) when positioned in the locked position, preferably said lock arrangement (10) further comprises an elongated actuation element (30) in working cooperation with the first and the second lock element (40), preferably said first and said second lock elements (40) are connected to the elongated actuation element (30) so that they can be sequentially displaced from the unlocked position to the locked position.

4. The load carrier according to any one of the preceding claims, wherein said lock arrangement (10) comprises an elongated actuation element (30), and in that said actuator (21) is arranged to displace said elongated actuation element (30) from a locked position to a first position, and thereby displacing a first and a second lock elements (40) from the locked position to an unlocked position, preferably said actuator (21) comprises a protrusion for operatively engage said elongated actuation element (30).

5. The load carrier according to any one of the preceding claims, wherein said lock arrangement (10) form a part of a lid hinge arrangement pivotally connecting the lid (4) with the base (3).

6. The load carrier according to any one of the claims 3-5, wherein said elongated actuation element (30) is displaced by translation, preferably in the longitudinal direction of the elongated actuation element (30).

7. The load carrier according to any one of the preceding claims, wherein said lid (4) and base (3) has a peripheral outer surface (3') and in that at least a portion of said actuator (21) is substantially flush with said peripheral outer surface of said lid (4) or said base (3).

8. The load carrier according to any one of the preceding claims, wherein said actuator (21) comprises a groove (22) providing a brace surface to a user for pushing said actuator (21) in an unlock direction.

9. The load carrier according to any one of the preceding claims, wherein said actuator (21) is accessible by a user via an aperture (28, 3"), said aperture (28, 3") being arranged in said base (3), lid (4) or in a panel (27').

10. The load carrier according to claim 8 and 9, wherein said groove (22) is partly delimited by a flange (26) extending from said base (3), lid (4) or said panel (27'), said flange (26) preferably blocking a user to push said actuator (21) in a preselected direction, preferably said preselected direction is in a direction opposite of said unlock direction.

11. The load carrier according to any one of the preceding claims, wherein said lock arrangement (10) is at least partly enclosed in a housing (27), said housing (27) preferably comprising a front panel (27') and a back panel (27").

12. The load carrier according to any one of the preceding claims, wherein said actuator (21) is slideably arranged between a portion (27") of the housing (27) and a side wall of the base (3) or lid (4).

13. The load carrier according to any one of the preceding claims, wherein said actuator (21) is biased towards a lock position.

14. The load carrier according to any one of the preceding claims, wherein said load carrier (1) is provided with a grip to a user for providing a counter force when displacing said actuator (21), said grip preferably being provided on a panel.

15. The load carrier according to any one of the preceding claims, wherein said load carrier (1) is provided with a key lock (50) separated from said actuator (21), preferably said key lock (50) being fixed from displacement with respect to said actuator (21).

## Patentansprüche

1. Lastenträger, wie zum Beispiel ein Dachkoffer, für ein Fahrzeug, umfassend einen Unterteil (3) und einen Deckel (4), wobei der Lastenträger (1) eine Verriegelungsanordnung (10) umfasst, die auf dem Unterteil (3) und /oder dem Deckel (4) angeordnet ist, wobei die Verriegelungsanordnung (10) über einen Aktuator (21) betätigt wird, wobei die Verriegelungsanordnung (10) wenigstens ein erstes und ein zweites verschiebbares Verriegelungselement (40) umfasst, die zueinander beabstandet sind und zwischen einer Verriegelungsposition und einer Entriegelungsposition bedienbar sind, wobei der Aktuator (21) ein verschiebbarer Griff (21) ist, der übersetzbar ausgebildet ist, **dadurch gekennzeichnet, dass** der verschiebbare Griff in einem Gehäuse (27) verschiebbar angeordnet ist, das auf dem Lastenträger befestigt ist.

2. Lastenträger nach Anspruch (1), wobei der Aktuator (21) einen Abschnitt zur Aufnahme eines Schlüssels umfasst, wie zum Beispiel ein vorstehendes Stützteil.

3. Lastenträger nach einem der vorhergehenden Ansprüche, wobei das erste und das zweite Verriegelungselement (40) so angeordnet sind, dass sie jeweils mit einem ersten und einem zweiten Verriegelungsglied (41) in Eingriff stehen, die auf dem gegenüberliegenden Unterteil (3) oder dem gegenüberliegenden Deckel (4) angeordnet sind, wenn sie in der Verriegelungsposition stehen, wobei die Verriegelungsanordnung (10) vorzugsweise weiter ein längliches Betätigungselement (30) umfasst, das mit dem ersten und dem zweiten Verriegelungselement (40) zusammenwirkt, wobei das erste und das zweite Verriegelungselement (40) vorzugsweise mit dem länglichen Betätigungselement (30) verbunden sind, so dass sie sequenziell von der Entriegelungsposition in die Verriegelungsposition verschoben werden können.

4. Lastenträger nach einem der vorhergehenden Ansprüche, wobei die Verriegelungsanordnung (10) ein längliches Betätigungselement (30) umfasst, und der Aktuator (21) so angeordnet ist, dass er das längliche Betätigungselement (30) aus einer Verriegelungsposition in eine erste Position verschiebt, und dadurch ein erstes und ein zweites Verriegelungselement (40) aus der Verriegelungsposition in eine Entriegelungsposition verschiebt, wobei der Aktuator (21) vorzugsweise einen Überstand umfasst, um funktionell mit dem länglichen Betätigungselement (30) in Eingriff zu stehen.

5. Lastenträger nach einem der vorhergehenden Ansprüche, wobei die Verriegelungsanordnung (10) einen Teil einer Deckelscharnieranordnung bildet, die den Deckel (4) schwenkbar mit dem Unterteil (3) verbindet.

6. Lastenträger nach einem der Ansprüche 3 bis 5, wobei das längliche Betätigungselement (30), vorzugsweise in der Längsrichtung des länglichen Betätigungselements (30) durch übersetzen verschoben wird.

7. Lastenträger nach einem der vorhergehenden Ansprüche, wobei der Deckel (4) und das Unterteil (3) eine periphere Außenumfangsfläche (3') haben, und das wenigstens ein Teil des Aktuators (21) im Wesentlichen bündig mit der peripheren Außenoberfläche des Deckels (4) oder dem Unterteil (3) abschließt.

8. Lastenträger nach einem der vorhergehenden Ansprüche, wobei der Aktuator (21) eine Nut (22) umfasst, die eine Oberfläche aus Streben bereitstellt, damit ein Benutzer den Aktuator (21) in eine Entriegelungsposition schieben kann.

9. Lastenträger nach einem der vorhergehenden Ansprüche, wobei der Aktuator (21) für einen Benutzer durch eine Öffnung (28, 3") zugänglich ist, wobei die Öffnung (28, 3") in dem Unterteil (3), dem Deckel (4) oder in einem Panel (27') angeordnet ist.

10. Lastenträger nach Anspruch 8 und 9, wobei die Nut (22) teilweise begrenzt ist von einem Flansch (26), der sich von dem Unterteil (3), dem Deckel (4) oder dem Panel (27') aus erstreckt, wobei der Flansch (26) vorzugsweise verhindert, dass ein Benutzer den Aktuator (21) in eine vorgewählte Richtung schiebt, wobei die vorgewählte Richtung vorzugsweise in eine Richtung entgegen der Entriegelungsrichtung verläuft.

11. Lastenträger nach einem der vorhergehenden Ansprüche, wobei die Verriegelungsanordnung (10) zumindest teilweise in einem Gehäuse (27) aufgenommen ist, wobei das Gehäuse (27) vorzugsweise ein vorderes Panel (27') und ein hinteres Panel (27") umfasst

12. Lastenträger nach einem der vorhergehenden Ansprüche, wobei der Aktuator (21) zwischen einem Bereich (27") des Gehäuses (27) und einer Seitenwand des Unterteils (3) oder des Deckels (4) verschiebbar angeordnet ist.

13. Lastenträger nach einem der vorhergehenden Ansprüche, wobei der Aktuator (21) zur einer Verriegelungsposition hin vorgespannt ist.

14. Lastenträger nach einem der vorhergehenden Ansprüche, wobei der Lastenträger (1) für einen Benutzer einen Handgriff aufweist, damit dieser eine Gegenkraft aufbringen kann, wenn er den Aktuator (21) verschiebt, wobei der Handgriff vorzugsweise auf einem Panel angeordnet ist.

15. Lastenträger nach einem der vorhergehenden Ansprüche, wobei der Lastenträger (1) ein Steckschloss (50) aufweist, das von dem Aktuator (21) getrennt ist, wobei das Steckschloss (50) vorzugsweise gegenüber Verschieben in Richtung auf den Aktuator (21) gesichert ist.

## Revendications

1. Porte-charge, tel qu'un coffre de toit, destiné à un véhicule, comprenant une base (3) et un couvercle (4), ledit porte-charge (1) comprenant un agencement de verrou (10) disposé sur ladite base (3) et/ou sur ledit couvercle (4), ledit agencement de verrou (10) étant actionné par l'intermédiaire d'un actionneur (21), ledit agencement de verrou (10) comprenant au moins un premier et un deuxième élément de verrou (40) déplaçables, disposés à une certaine distance l'un de l'autre et pouvant passer d'une une position verrouillée à une position non verrouillée et vice-versa, ledit actionneur (21) étant une poignée coulissante (21) conçue de façon à pouvoir subir une translation, **caractérisé en ce que** la poignée coulissante est disposée d'une manière coulissante dans un boîtier (27) monté sur le porte-charge.

2. Porte-charge selon la revendication 1, dans lequel ledit actionneur (21) comprend une portion destinée à recevoir une clé, telle qu'un élément support en saillie.

3. Porte-charge selon l'une quelconque des revendications précédentes, dans lequel ledit premier et ledit deuxième élément de verrou (40) sont disposés de façon à entrer en prise respectivement avec une première et une deuxième pièces de verrou (41) disposées sur la base (3) opposée ou sur le couvercle (4) opposé quand ils sont en position verrouillée, ledit agencement de verrou (10) comprenant de préférence en outre un élément d'actionnement allongé (30) en coopération fonctionnelle avec le premier et le deuxième éléments de verrou (40), ledit premier et ledit deuxième élément de verrou (40) étant de préférence reliés à un élément d'actionnement allongé (30) de façon qu'ils puissent être déplacés en séquence de la position non verrouillée à la position verrouillée.

4. Porte-charge selon l'une quelconque des revendications précédentes, dans lequel ledit agencement de verrou (10) comprend un élément d'actionnement allongé (30), et dans lequel ledit actionneur (21) est disposé de façon à déplacer ledit élément d'actionnement allongé (30) d'une position verrouillée à une première position, en déplaçant de ce fait un premier et un deuxième élément de verrou (40) de la position verrouillée à une position non verrouillée, ledit actionneur (21) comprenant de préférence une saillie destinée à entrer en prise fonctionnelle avec ledit élément d'actionnement allongé (30).

5. Porte-charge selon l'une quelconque des revendications précédentes, dans lequel ledit agencement de verrou (10) fait partie d'un agencement de charnière de couvercle reliant avec pivotement le couvercle (4) à la base (3).

6. Porte-charge selon l'une quelconque des revendications 3 à 5, dans lequel ledit élément d'actionnement allongé (30) est déplacé par translation, de préférence dans la direction longitudinale de l'élément d'actionnement allongé (30).

7. Porte-charge selon l'une quelconque des revendications précédentes, dans lequel ledit couvercle (4) et ladite base (3) possèdent une surface extérieure périphérique (3'), et dans lequel au moins une portion dudit actionneur (21) est sensiblement au même niveau que ladite surface extérieure périphérique dudit couvercle (4) ou de ladite base (3).

8. Porte-charge selon l'une quelconque des revendications précédentes, dans lequel ledit actionneur (21) comprend une gorge (22) mettant à la disposition d'un utilisateur une surface d'appui pour pousser ledit actionneur (21) dans un sens de déverrouillage.

9. Porte-charge selon l'une quelconque des revendications précédentes, dans lequel un utilisateur peut accéder audit actionneur (21) par une ouverture (28, 3"), ladite ouverture (28, 3") étant disposée dans ladite base (3), dans ledit couvercle (4) ou dans un panneau (27').

10. Porte-charge selon les revendications 8 et 9, dans lequel ladite gorge (22) est en partie délimitée par un flasque (26) s'étendant à partir de ladite base (3), du couvercle (4) ou dudit panneau (27'), ledit flasque (26) empêchant de préférence un utilisateur de pousser ledit actionneur (21) dans un sens présélectionné, ledit sens présélectionné étant de préférence opposé audit sens de déverrouillage.

11. Porte-charge selon l'une quelconque des revendications précédentes, dans lequel ledit agencement de verrou (10) est au moins en partie enfermé dans un boîtier (27), ledit boîtier (27) comprenant de préférence un panneau avant (27') et un panneau arrière (27").

12. Porte-charge selon l'une quelconque des revendications précédentes, dans lequel ledit actionneur (21) est disposé d'une manière coulissante entre une portion (27") du boîtier (27) et une paroi latérale de la base (3) ou du couvercle (4).

13. Porte-charge selon l'une quelconque des revendications précédentes, dans lequel ledit actionneur (21) est sollicité vers une position de verrouillage.

14. Porte-charge selon l'une quelconque des revendications précédentes, ledit porte-charge (1) étant pourvu d'une pièce de préhension, pour permettre à un utilisateur d'exercer une contre-force lors du déplacement dudit actionneur (21), ladite pièce de préhension étant de préférence disposée sur un panneau.

15. Porte-charge selon l'une quelconque des revendications précédentes, ledit porte-charge (1) étant pourvu d'une serrure (50) séparée dudit actionneur (21), ladite serrure (50) ne pouvant subir de déplacement par rapport audit actionneur (21).
